# EUROPEAN PATENT SPECIFICATION

(11) **EP 1 399 883 B1**
(45) Date of publication and mention of the grant of the patent: **14.02.2007**
(21) Application number: 02735726.8
(22) Date of filing: 03.06.2002
(51) Int. Cl.: G06T 1/00

(54) **CONVERSION UNIT AND METHOD AND IMAGE PROCESSING APPARATUS**
UMSETZUNGSEINHEIT UND -VERFAHREN UND BILDVERARBEITUNGSVORRICHTUNG
UNITE DE CONVERSION ET PROCEDE ET DISPOSITIF DE TRAITEMENT D'IMAGES

(30) Priority: 06.06.2001 EP 01202165
(43) Date of publication of application: 24.03.2004
(73) Proprietor: Koninklijke Philips Electronics N.V., 5621 BA Eindhoven (NL)
(72) Inventor: PETERS, Franciscus, J., NL-5656 AA Eindhoven (NL); DE HAAN, Gerard, NL-5656 AA Eindhoven (NL); GELISSEN, Johan, H., A., NL-5656 AA Eindhoven (NL)
(74) Representative: Groenendaal, Antonius W. M.
(86) International application number: PCT/IB2002/002064
(87) International publication number: WO 2002/099749

(56) References cited:
- GB-A- 2 305 325
- US-A- 5 303 045
- GILLIES D ET AL: "V.L.S.I. REALISATIONS FOR PICTURE IN PICTURE AND FLICKER FREE TELEVISION DISPLAY" IEEE TRANSACTIONS ON CONSUMER ELECTRONICS, IEEE INC. NEW YORK, US, vol. 34, no. 1, February 1988 (1988-02), pages 253-260, XP001150759 ISSN: 0098-3063
- HAAN DE G: "IC FOR MOTION-COMPENSATED DE-INTERLACING, NOISE REDUCTION, AND PICTURE-RATE CONVERSION" IEEE TRANSACTIONS ON CONSUMER ELECTRONICS, IEEE INC. NEW YORK, US, vol. 45, no. 3, August 1999 (1999-08), pages 617-624, XP000926975 ISSN: 0098-3063

## Description

The invention relates to an image processing apparatus

The invention further relates to a conversion unit.

The invention further relates to a conversion method

An image processing apparatus of the kind described in the opening paragraph is known from the book "Computer Graphics Principles and Practice" by J.D. Foley, A. van Dam, S.K. Feiner, J.F Hughes, from Addison-Wesley, Reading etc, 1996. In chapter 4 of this book it is described that traditionally image data resulting from a graphics pipeline are stored in a frame buffer. A video controller accesses that frame buffer to transmit data to the display device.

The frequency of displaying images on the display device is called the display update rate. The frame buffer update, i.e. writing image data into the frame buffer, is usually variable and not properly fitted to the display update rate. To prevent visible artifacts in the images on the display, double buffering can be applied. This means that one of the frame buffers can be accessed by the video controller while the other is updated by the graphics pipeline. The combination of frame buffer(s) and video controller is a conversion unit.

However, due to e.g. insufficient system resources for the graphics pipeline, the frame buffer update rate may be slow compared to the display frame rate. This badly affects the quality of the images to be seen on the display. Especially movement can be shown shaky. The resources of the graphics pipeline may comprise a processor, a memory device and a data bus.

In US 5,303,045 an input digital video signal with a frame rate of 50Hz or 60Hz is converted to an output digital video signal having a different frame rate and a different number of pixel lines per frame. A first series of progressive scan format frames is formed from the input signal. Then, a second series of frames is formed from the first series of frames using motion compensated temporal interpolation between successive frames of the first series in producing at least some of the frames of the second series so as to provide the difference in frame rate. Before or after the second series of frames is formed, vertical spatial interpolation is performed so as to provide the difference in the number of pixel lines per frame.

Gillies D. et al:"V.L.S.I. Realisations for picture in picture and flicker free television display", IEEE Transactions on consumer electronics IEEE Inc. New York, US, Vol. 43, no. 1, February 1988 (1988-02), pages 253-260, XP001150759 ISSN: 0098-3063 introduces two CMOS devices, which, through the combination of digital signal processing and external DRAMs, allow the display of television signals with higher quality and with more features. One device allows simultaneously display of two independent video sources, while the other increases displayed picture quality by doubling the field display frequency to eliminate large area flicker.

It is a first object of the invention to provide a conversion unit of the kind described in the opening paragraph, which is able to generate a series of output images showing a relatively smooth motion.

It is a second object of the invention to provide a conversion method of the kind described in the opening paragraph of generating a series of output images showing a relatively smooth motion.

The first object of the invention is achieved by a conversion unit of claim 1. The major advantage of this conversion unit is that it generates new images by means of temporal interpolation of the images of the input series. An image apparatus according to the prior art only "duplicates" images: it displays the original images several times. With a conversion unit according to the invention it is possible that the series of output images comprises copies of the images of the input series, besides the new images. The conversion unit requires information about the time of generation of the various input images, in order to control the interpolation. The result is that the conversion unit works even if the first time interval is substantially different from a second time interval between the second time of generation of the second input image and a third time of generation of a third input image of the input series. The first time interval and the second time interval might be different, e.g. because of a variable load on the resources of the graphics pipeline. Temporal interpolation is known in up-conversion in Philips television systems. However in that case the time intervals between consecutive images of the input series are mutually equal. Hence it is not required to determine the time intervals in order to control the interpolation in that case.

An embodiment of the image processing apparatus according to the invention further comprises a motion estimator for controlling the means for calculating the series of output images, in order to perform motion compensated interpolation. This might be e.g. a motion estimator as described by G. de Haan, et al in "True motion estimation with 3-D recursive search block-matching," in Proceedings IEEE Transactions on Circuits and Systems for Video Technology, 1994, vol. 3, pp. 249-256. The advantage of motion compensated interpolation is an improved image quality. For the motion estimation it is possible to use more than two consecutive images. It is also possible to use more than two consecutive images for the interpolation.

An embodiment of the image processing apparatus according to the invention further comprises a second means for receiving a second series of input images and that the conversion unit is designed to calculate the series of output images based on images of the first series of input images and the second series of input images. An example of this embodiment is a TV being able to up-convert a sequence of video images together with the graphics as generated by the graphics pipeline, representing the settings of the TV, i.e. onscreen display. Some parts of the conversion unit can be shared to save costs. Two types of sharing can be distinguished:
- Temporal: parts of the conversion unit are used alternatingly for processing images of the first input series and images of the second input series. Optionally intermediate results are stored temporarily.
- Spatial: use is made of the fact that portions of images of the first series have to be merged with portions of the images of the second input series. It is possible to share e.g. memory locations that correspond with these portions.

In an embodiment of the image processing apparatus according to the invention the conversion unit is designed:
- to calculate a first intermediate motion compensated interpolated image by interpolating between the first input image and the second input image of the first series of input images;
- to calculate a second intermediate motion compensated interpolated image by interpolating between images of the second series of input images; and
- to merge the first intermediate image with the second intermediate image in order to create a combined output image.

It is possible to change the order of interpolation and merging. However the order as chosen for this embodiment results in superb image quality of the output images.

These and other aspects of the conversion unit of claim 1, of the method of claim 6, and of the image processing apparatus of claim 7 will become apparent from and will be elucidated with reference with respect to the implementations and embodiments described hereinafter and with reference to the accompanying drawings, wherein:
Fig. 1A schematically shows an embodiment of the image processing apparatus;
Fig. 1B schematically shows an embodiment of the image processing apparatus with a motion estimator;
Fig. 1C schematically shows an embodiment of the image processing apparatus which is designed to process two series of input images simultaneously;
Fig. 2A schematically shows an embodiment of the conversion unit;
Fig. 2B schematically shows an embodiment of the conversion unit with a motion estimator;
Fig. 2C schematically shows an embodiment of the conversion unit which is designed to process two series of input images simultaneously; and
Fig. 3 schematically shows that input images of two series are interpolated in the temporal domain and merged into one series of output images.

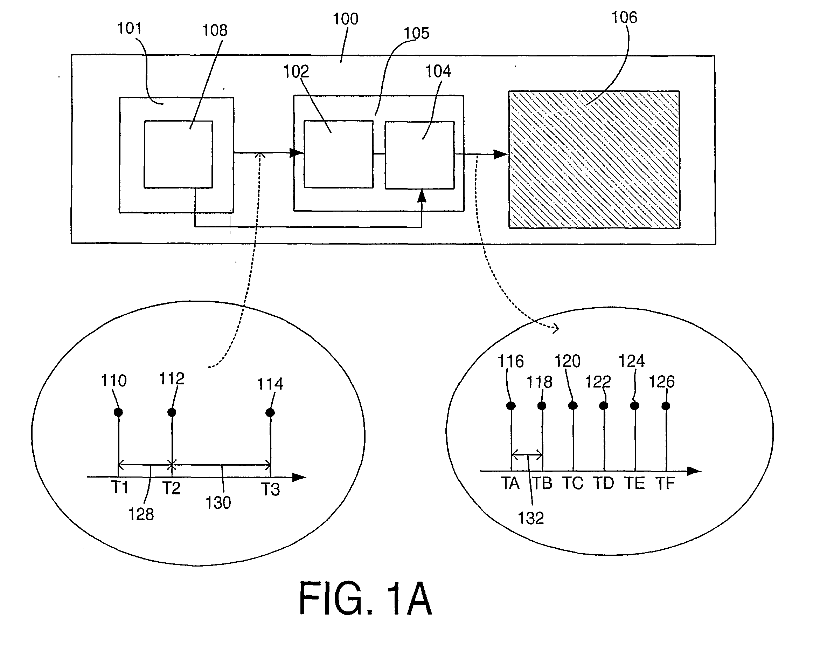

Fig. 1A schematically shows an embodiment of the image processing apparatus 100 which comprises:
- a graphics pipeline 101 with a processor 108;
- a conversion unit 105 with:
   - a means for receiving 102 the first series of input images 110-114, generated by the graphics pipeline 101; and
   - a means for calculating 104 a series of output images 116-126; and
   - a display device 106 for displaying the output images. This display device is optional. It is also possible that the output images are displayed on a display device external to the image processing apparatus 100, e.g. in the case of a Set Top Box.

The first input image 110, the second input image 112 and the third input image 114 are generated on time T1, T2 respectively T3. The conversion unit 105 is designed to determine the time interval between consecutive input images, e.g. a first time interval 128 between T1 and T2 or a second time interval 130 between T2 and T3. In order to determine a time interval 128,130 the conversion unit 105 requires the information about the time of generation of input images. This information is provided by the processor 108 of the graphics pipeline 101. The various time intervals 128,130 between generation of input images might be unequal. The output images 116-126 are generated on TA, TB, TC, TE respectively TF. The time interval 132 between two output images e.g. 116,118 is substantially equal to a predetermined value. The output images 116-126 are calculated by means of interpolating between images of the series of input images. The table below gives an example of the relation between input and output images.

| Output image | Is based on input images |
|---|---|
| 116 | 110 and 112 |
| 118 | 110 and 112 |
| 120 | 112 and 114 |
| 122 | 112 and 114 |
| 124 | 112 and 114 |
| 126 | 112 and 114 |

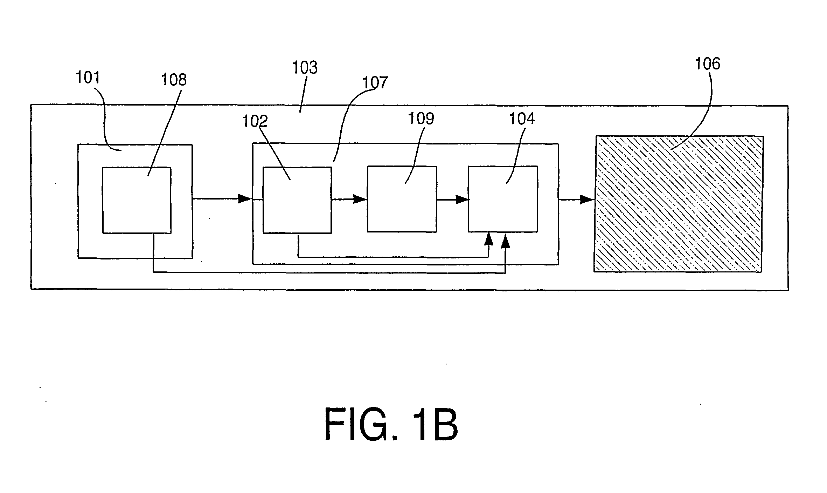

Fig. 1B schematically shows an embodiment of the image processing apparatus 103 with a conversion unit 107 that comprises a motion estimator 109. This might be e.g. a motion estimator as described by G. de Haan, et al in "True motion estimation with 3-D recursive search block-matching," in Proceedings IEEE International Conference on Circuits and Systems for Video Technology, 1994, vol. 3, pp. 249-256. The motion estimator 109 provides motion vector fields to the means for calculating 104 a series of output images 116-126. The vectors of these motion vector fields are used to shift blocks of pixels, i.e. portions of the input images 110-114, in order to calculate motion compensated output images 116-126. The means for calculating 104 a series of output images requires three types of input:
- input images, being two dimensional arrays of pixel values;
- motion vector fields, being two dimensional arrays of vectors; and
- timing, scalar values indicating the generation time of the various images.

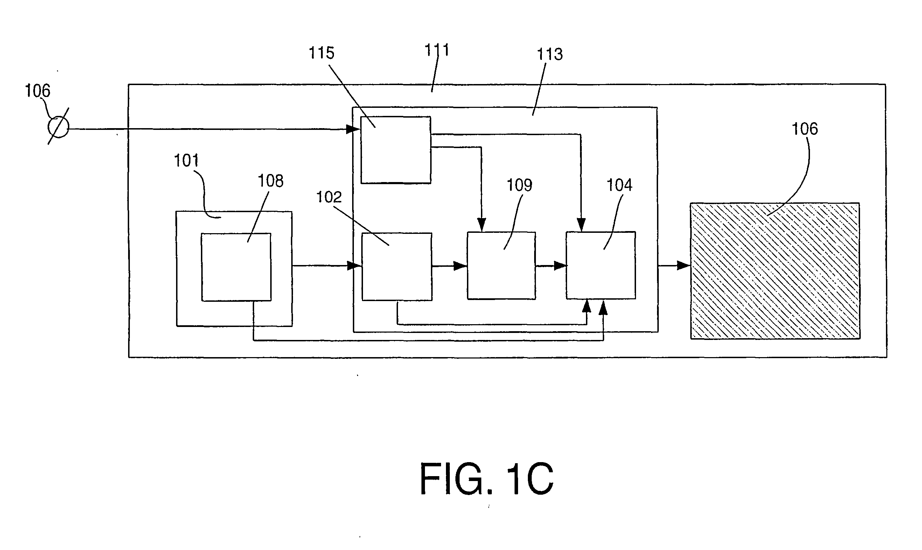

Fig. 1C schematically shows an embodiment of the image processing apparatus 111 which is designed to process two series of input images simultaneously. Besides a first series of input images 308,310 a second series of input images 302-306 is provided. The input images 302-306 of the second series are generated external to the image processing apparatus 111. The input images 302-306 of the second series are provided to the processing apparatus 111 via the input connector 106. These images might come from e.g. a broadcast or from a local storage device. The conversion unit 113 comprises a second means for receiving 115 and to buffer the second series of input images 302-306. The moments of time T1, T3 and T4 of creation of input images 302, 304 respectively 306 are equidistant in time space. The size of the images of the first series and of the second series might be different. The means for calculating 104 a series of output images is designed to merge images even if they differ in size. This can be achieved by means of zooming. It is also possible that an entire image of one of the series is merged with a portion of the other series in the case that the latter image is substantially bigger than the former image.

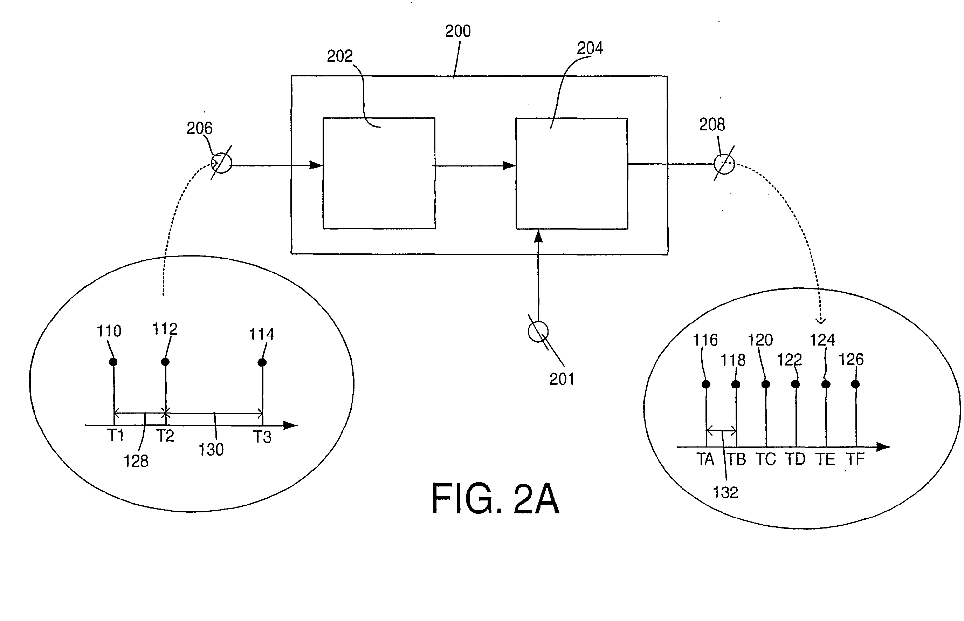

Fig. 2A schematically shows an embodiment of the conversion unit 200. The conversion unit 200 requires a series of input images 110-114 on its input connector 206. Input images 110-114 are buffered in the memory device of the receiving means 202. The memory device of the receiving means is designed to store at least two input images. The conversion unit 200 provides a series of output images 116-125 on its input connector 208. The conversion unit 200 requires for each of the input images 110-114 information about the time of creation T1-T3 on its control connector 201. The output images 116-126 are generated equidistant in time space: After each predetermined time interval 132 a new output image is generated by the means for calculating 204 based on the input images as stored in the memory device of the receiving means 202. The interpolation as applied by the means for calculating 204 is controlled by the relation between the times T1-T3 of creation of the input images and of the time of creation TA , TB, TC, TD, TE, TF of a particular output image.

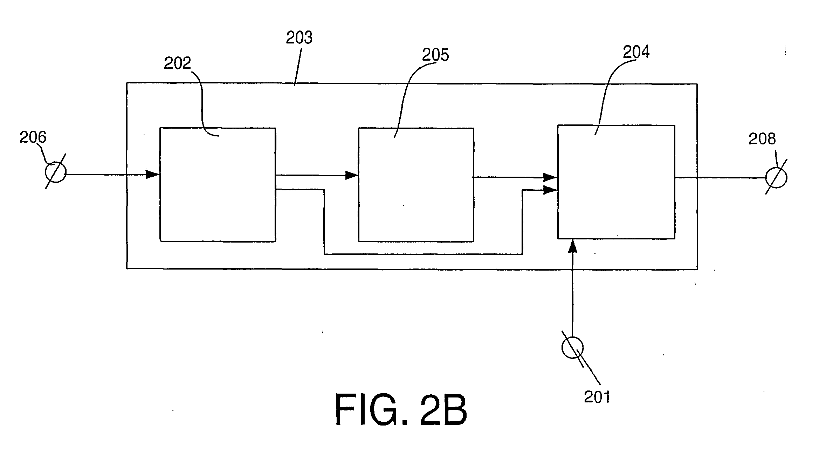

Fig. 2B schematically shows an embodiment of the conversion unit 203 that comprises a motion estimator 205. The motion estimator 205 provides motion vector fields to the means for calculating 204 a series of output images. The vectors of these motion vector fields are used to shift blocks of pixels, i.e. portions of the input images 110-114, in order to calculate motion compensated output images 116-126.

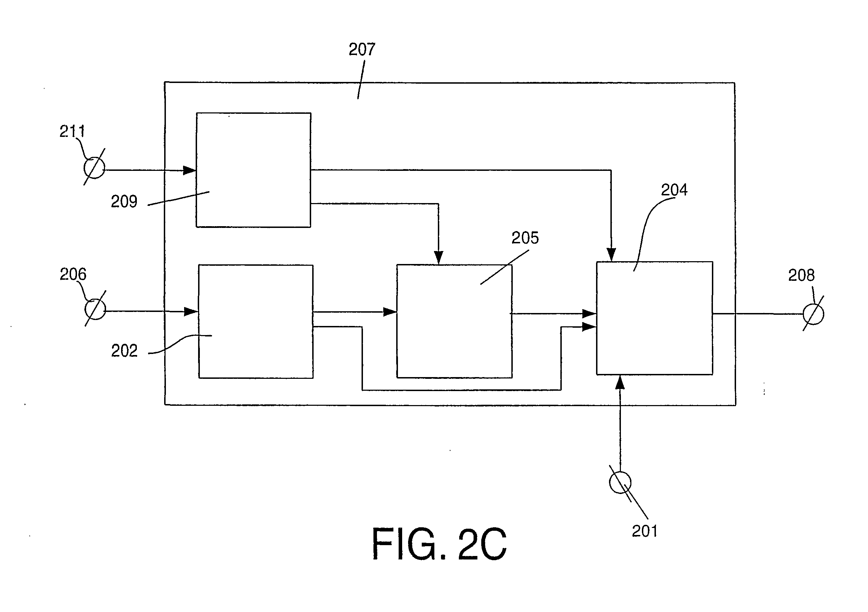

Fig. 2C schematically shows an embodiment of the conversion unit 207 which is designed to process two series of input images simultaneously. The first series of input images is provided to the conversion unit 207 at the first input connector 206. The second series of input images is provided to the conversion unit 207 at the second input connector 211. A subset of the first series is stored in the memory device of the first means for receiving 202. A subset of the second series is stored in the memory device of the second means for receiving 209. The motion estimator 205 switches between calculating a motion vector field corresponding to images of the first series and calculating a motion vector field corresponding to images of the second series. These motion vector fields are input for the means for calculating 204. Optionally motion vector fields are stored temporarily. The means for calculating 204 calculates a first intermediate image by motion compensated interpolation of input images of one of the input series. After having calculated a second intermediate image based on input images of the other series, the first and the second intermediate image are merged and provided at the output connector 208.

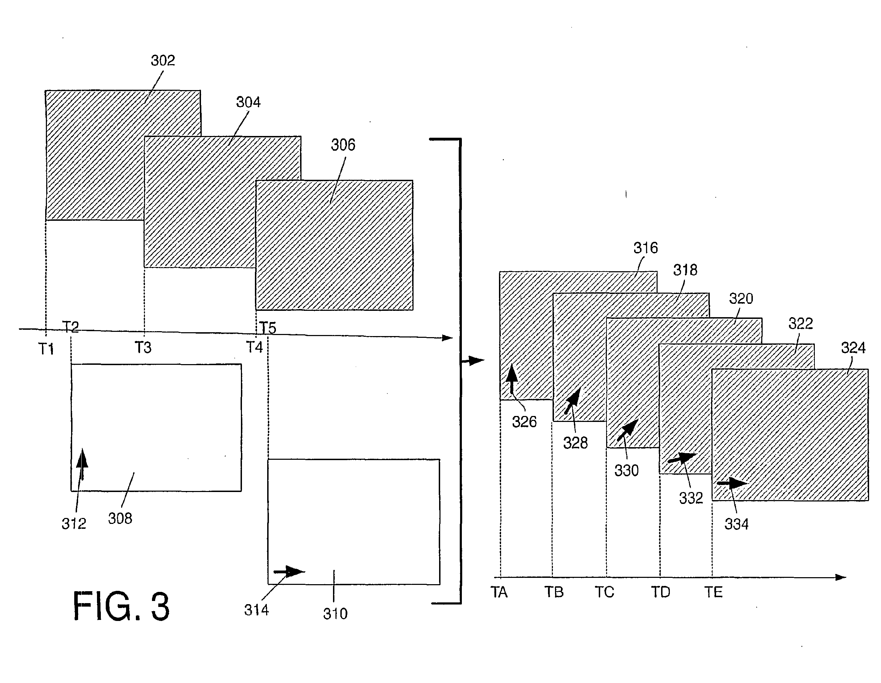

Fig. 3 schematically shows that input images 302-310 of two series are interpolated in the temporal domain and merged into one series of output images 316-324. The first series of input images comprises the images 308,310 that are generated at T2 respectively T5. In the lower left corner of image 308 an arrow 312 is present with a vertical direction. In the lower left corner of image 310 an arrow 314 is present with a horizontal. The two series of images are provided to a conversion unit 207 as described in Fig. 2C. The output of the conversion unit 207 is a series of motion compensated interpolated output images 316-324. In each of these latter images an arrow 326-334 is present which depicts some states between vertical and horizontal. Because of the separate interpolations of images of the first input series and of images of the second input series, no visible artifacts are introduced in the direct neighborhood of the pixels corresponding to the arrows 326-334 as present in the output images 316-324.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claims enumerating several means, several of these means can be embodied by one and the same item of hardware.

## Claims

1. A conversion unit (200, 105) comprising:
- a means for receiving (202, 102) a first series of input images (110-114) comprising successively a first input image (110) a second input image (112), and at least a third input image (114); and
- a means for calculating (104) a series of output images (116-126) based on the first series of input images, with an output image (120, 122, 124, 126) is being spaced a predetermined time interval (132) from a predecessor (118, 120, 122, 124), respectively, if any, **characterized in that** the conversion unit (200, 105) being designed to determine a first time interval (128) between a first time of generation (T1) of the first input image (110) and a second time of generation (T2) of the second input image (112) and to calculate a particular output image (116, 118) by interpolating between the first input image (110) and the second input image (112) on the basis of the first time interval (128), and to determine a second time interval (130) between the time of generation (T2) of the second input image (112) and a third time of generation (T3) of the third input image (114) and to calculate a particular output image (120, 122, 124, 126) by interpolating between the second input image (112) and the third input image (114) on the basis of the second time interval (130).

2. A conversion unit (203) as claimed in claim 1, **characterized in** further comprising a motion estimator (205) for controlling the means for calculating (204) the series of output images (116-126), in order to perform motion compensated interpolation.

3. A conversion unit (207) as claimed in claim 1, **characterized in** further comprising a second means for receiving (209) a second series of input images (308,310) and that the conversion unit (207) is designed to calculate the series of output images (316-326) based on images of the first series of input images (308,310) and the second series of input images (302,306).

4. A conversion unit (207) as claimed in claim 2, **characterized in** further comprising a second means for receiving (209) a second series of input images (308,310) and that the conversion unit (207) is designed to calculate the series of output images (316-326) based on images of the first series of input images (308,310) and the second series of input images (302,306).

5. A conversion unit (207) as claimed in claim 3, **characterized in** being designed:
- to calculate a first intermediate motion compensated interpolated image by interpolating between the first input image (110) and the second input image (112) of the first series of input images;
- to calculate a second intermediate motion compensated interpolated image by interpolating between images of the second series of input images; and
- to merge the first intermediate image with the second intermediate image in order to create a combined output image.

6. A conversion method comprising:
- a step of receiving a first series of input images comprises receiving successively a first input image (110), a second input image (112) and at least a third input image (114); and
- a step of calculating comprises calculating a series of output images based on the first series of input images, with an output image (118) being spaced a predetermined time interval (132) from a predecessor (116), if any, and further calculating an output image (120, 122, 124, 126) being spaced a predetermined time interval (132) from a predecessor (118, 120, 122, 124), respectively
**characterized in that** the method comprises a timing step comprising determining a first time interval (128) between a first time of generation (T1) of the first input image (110) and a second time of generation (T2) of the second input image (112), and determining a second time interval (130) between the time of generation (T2) of a second input image (112) and a third time of generation (T3) of a third input image (114) and
- that the step of calculating comprises calculating for the series of output images (116 and 118) a particular output image (116, 118) by interpolating between the first input image (110) and the second input image (112) on the basis of the first time interval (128) and
- calculating for the series of output images (120, 122, 124, 126) a particular output image (120, 122, 124, 126) by interpolating between the second input image (112) and the third input image (114) on the basis of the second time interval (130).

7. An image processing apparatus (100) comprising a conversion unit according to claim 1, the processing apparatus (100) further comprising:
- a processor (108) based graphics pipeline (101) for generating a first series of input images (110-114) comprising successively a first input image (110) and a second input image (112); and
- a display device (106) for displaying the series of output images (116-126).

8. An image processing apparatus (103) as claimed in claim 7, **characterized in that** the conversion unit (107) further comprises a motion estimator (109) for controlling the means for calculating (104) the series of output images (116-126), in order to perform motion compensated interpolation.

9. An image processing apparatus (111) as claimed in claim 8, **characterized in that** the conversion unit (113) further comprises a second means for receiving (115) a second series of input images (302-306) and that the conversion unit (113) is designed to calculate the series of output images (316-324) based on images of the first series of input images (308,310) and the second series of input images (302-306).

10. An image processing apparatus (111) as claimed in claim 9, **characterized in that** the conversion unit (113) is designed:
- to calculate a first intermediate motion compensated interpolated image by interpolating between the first input image (110) and the second input image (112) of the first series of input images;
- to calculate a second intermediate motion compensated interpolated image by interpolating between images of the second series of input images; and
- to merge the first intermediate image with the second intermediate image in order to create a combined output image.

## Patentansprüche

1. Umsetzungseinheit (200, 105), welche die nachfolgenden Elemente umfasst:
- ein Mittel zum Empfangen (202, 102) einer ersten Reihe von Eingangsbildern (110-114) mit aufeinander folgend einem ersten Eingangsbild (110), einem zweiten Eingangsbild (112) und wenigstens einem dritten Eingangsbild (114); und
- ein Mittel zum Berechnen (104) einer Reihe von Ausgangsbildern (116-126) auf Basis der ersten Reihe von Eingangsbildern, wobei ein Ausgangsbild (120, 122, 124, 126) um ein vorbestimmtes Zeitintervall (132) von einem Vorgänger (118, 120, 122, 124) entfernt ist, wenn überhaupt, **dadurch gekennzeichnet, dass** die Umsetzungseinheit (200, 105) entworfen ist um ein erstes Zeitintervall (128) zwischen einem ersten Zeitpunkt der Erzeugung (T1) des ersten Eingangsbildes (110) und einem zweiten Zeitpunkt der Erzeugung (T2) des zweiten Eingangsbildes (112) zu ermitteln und um ein bestimmtes Ausgangsbild (116, 118) zu berechnen durch Interpolation zwischen dem ersten Eingangsbild (110) und dem zweiten Eingangsbild (112) auf Basis des ersten Zeitintervalls (128), und um ein zweites Zeitintervall (130) zwischen der Zeiterzeugung(T2) des zweiten Eingangsbildes (112) und einer dritten Zeiterzeugung (T3) des dritten Eingangsbildes zu ermitteln und um ein bestimmtes Ausgangsbild (120, 122, 124, 126) durch Interpolation zwischen dem zweiten Eingangsbild (112) und dem dritten Eingangsbild (114) auf Basis des zweiten Zeitintervalls (130) zu berechnen.

2. Umsetzungseinheit (203) nach Anspruch 1, **dadurch gekennzeichnet, dass** diese weiterhin einen Bewegungsschätzer (205) aufweist zur Steuerung der Mittel zum Berechnen (204) der Reihe von Ausgangsbildern (116-126), zum Durchführen einer bewegungskompensierten Interpolation.

3. Umsetzungseinheit (207) nach Anspruch 1, **dadurch gekennzeichnet, dass** sie weiterhin ein zweites Mittel aufweist zum Empfangen (209) einer zweiten Reihe von Eingangsbildern (308, 310) und dass die Umsetzungseinheit (207) dazu entworfen ist, die Reihe von Ausgangsbildern (316-326) auf Basis von Bildern der ersten Reihe von Eingangsbildern (308, 310) und der zweiten Reihe von Eingangsbildern (302, 306) zu berechnen.

4. Umsetzungseinheit (207) nach Anspruch 2, **dadurch gekennzeichnet, dass** sie weiterhin ein zweites Mittel aufweist zum Empfangen (209) einer zweiten Reihe von Eingangsbildern (308, 310) und dass die Umsetzungseinheit (207) dazu entworfen ist, die Reihe von Ausgangsbildern (316, 326) auf Basis von Bildern der ersten Reihe von Eingangsbildern (308, 310) und der zweiten Reihe von Eingangsbildern (302, 306) zu berechnen.

5. Umsetzungseinheit (207) nach Anspruch 3, **dadurch gekennzeichnet, dass** sie entworfen ist:
- zum Berechnen eines ersten zwischen liegenden bewegungskompensierten interpolierten Bildes durch Interpolation zwischen dem ersten Eingangsbild (110) und dem zweiten Eingangsbild (112) der ersten Reihe von Eingangsbildern;
- zum Berechnen eines zweiten zwischen liegenden bewegungskompensierten interpolierten Bildes durch Interpolation zwischen Bildern der zweiten Reihe von Eingangsbildern; und
- zum Vermischen des ersten zwischen liegenden Bildes mit dem zweiten zwischen liegenden Bild zum Schaffen eines kombinierten Ausgangsbildes.

6. Umsetzungsverfahren, das die nachfolgenden Verfahrensschritte umfasst:
- einen Schritt zum Empfangen einer ersten Reihe von Eingangsbildern umfasst das Empfangen von nacheinander einem ersten Eingangsbild (110), einem zweiten Eingangsbild (112) und wenigstens einem dritten Eingangsbild (114); und
- einen Schritt zum Berechnen einer Reihe von Ausgangsbildern auf Basis der ersten Reihe von Eingangsbildern, wobei ein Ausgangsbild (118) um ein vorbestimmtes Zeitintervall (132) von einem Vorgänger (116) entfernt liegt, falls überhaupt, und weiterhin zum Berechnen eines Ausgangsbildes (120, 122, 124, 126), das um ein vorbestimmtes Zeitintervall (132) von einem Vorgänger (118, 120, 122, 124) entfernt liegt,
**dadurch gekennzeichnet, dass** das Verfahren einen Zeitbestimmungsschritt umfasst, der die Ermittlung eines ersten Zeitintervalls (128) zwischen einem ersten Zeitpunkt der Erzeugung (T1) des ersten Eingangsbildes (110) und einem zweiten Zeitpunkt der Erzeugung (T2) des zweiten Eingangsbildes (112) umfasst, und die Ermittlung eines zweiten Zeitintervalls (130) zwischen dem Erzeugungszeitpunkt (T2) eines zweiten Eingangsbildes (112) und einem dritten Erzeugungszeitpunkt (T3) eines dritten Eingangsbildes (114) und
- dass der Schritt der Berechnung die Berechnung einer bestimmten Ausgangsbildes (116, 118) für die Reihe von Ausgangsbildern (116 und 118) durch Interpolation zwischen dem ersten Eingangsbild (110) und dem zweiten Eingangsbild (112) auf Basis des ersten Zeitintervalls (128) umfasst, und
- die Berechnung eines bestimmten Ausgangsbildes (120, 122, 124, 126) für die Reihe von Ausgangsbildern (120, 122, 124, 126) durch Interpolation zwischen dem zweiten Eingangsbild (112) und dem dritten Eingangsbild (114) auf Basis des zweiten Zeitintervalls (130).

7. Bildverarbeitungsanordnung (100) mit einer Umsetzungseinheit nach Anspruch 1, wobei die Bildverarbeitungsanordnung (100) weiterhin die nachfolgenden Elemente umfasst:
- eine Prozessor (108) basierte graphische Pipeline (101) zum Erzeugen einer ersten Reihe von Eingangsbildern (110-114) mit nacheinander einem ersten Eingangsbild (110) und einem zweiten Eingangsbild (112); und
- eine Wiedergabeanordnung (106) zur Wiedergabe der Reihe von Ausgangsbildern (116-126).

8. Bildverarbeitungsanordnung (103) nach Anspruch 7, **dadurch gekennzeichnet, dass** die Umsetzungseinheit (107) weiterhin einen Bewegungsumsetzer (109) aufweist zur Steuerung der Mittel zum Berechnen (104) der Reihe von Ausgangsbildern (116-126) um eine bewegungskompensierte Interpolation durchzuführen.

9. Bildverarbeitungsanordnung (111) nach Anspruch 8, **dadurch gekennzeichnet, dass** die Umsetzungseinheit (113) weiterhin ein zweites Mittel aufweist zum Empfangen (115) einer zweiten Reihe von Eingangsbildern (302-306) und dass die Umsetzungseinheit (113) dazu entworfen ist, die Reihe von Ausgangsbildern (316-324) auf Basis von Bildern der ersten Reihe von Eingangsbildern (308, 310) und der zweiten Reihe von Eingangsbildern)302-306) zu berechnen.

10. Bildverarbeitungsanordnung (111) nach Anspruch 9, **dadurch gekennzeichnet, dass** die Umsetzungseinheit (113) entworfen ist:
- zum Berechnen eines ersten zwischen liegenden bewegungskompensierten interpolierten Bildes durch Interpolation zwischen dem ersten Eingangsbild (110) und dem zweiten Eingangsbild (112) der ersten Reihe von Eingangsbildern;
- zum Berechnen eines zweiten zwischen liegenden bewegungskompensierten interpolierten Bildes durch Interpolation zwischen Bildern der ersten Reihe von Eingangsbildern; und
- zum Vermischen des ersten zwischen liegenden Bildes mit dem zweiten zwischen liegenden Bild um ein kombiniertes Ausgangsbild zu schaffen.

## Revendications

1. Unité de conversion (200, 105) comportant:
- un moyen de réception (202, 102) d'une première série d'images d'entrée (110-114) comportant successivement une première image d'entrée (110), une deuxième image d'entrée (112), et au moins une troisième image d'entrée (114); et
- un moyen de calcul (104) d'une série d'images de sortie (116-126) sur base de la première série d'images d'entrée, où une image de sortie (120, 122, 124, 126) est espacée d'un intervalle de temps prédéterminé (132) d'un prédécesseur (118, 120, 122, 124), respectivement, si présent, **caractérisé en ce que** l'unité de conversion (200, 105) est conçue pour déterminer un premier intervalle de temps (128) entre un premier instant de génération (T1) de la première image d'entrée (110) et un deuxième instant de génération (T2) de la deuxième image d'entrée (112) et pour calculer une image de sortie particulière (116, 118) en interpolant entre la première image d'entrée (110) et la deuxième image d'entrée (112) sur base du premier intervalle de temps (128), et pour déterminer un deuxième intervalle de temps (130) entre l'instant de génération (T2) de la deuxième image d'entrée (112) et un troisième instant de génération (T3) de la troisième image d'entrée (114) et pour calculer une image de sortie particulière (120, 122, 124, 126) en interpolant entre la deuxième image d'entrée (112) et la troisième image d'entrée (114) sur base du deuxième intervalle de temps (130).

2. Unité de conversion (203) selon la revendication 1, **caractérisée en ce qu'**elle comporte en outre un estimateur de mouvement (205) permettant de commander un moyen de calcul (204) de la série d'images de sortie (116-126), dans le but de réaliser l'interpolation à compensation de mouvement.

3. Unité de conversion (207) selon la revendication 1, **caractérisée en ce qu'**elle comporte en outre un deuxième moyen de la réception (209) d'une deuxième série d'images d'entrée (308,310) et **en ce que** l'unité de conversion (207) est conçue pour calculer la série d'images de sortie (316-326) sur base des images de la première série d'images d'entrée (308,310) et la deuxième série d'images d'entrée (302,306).

4. Unité de conversion (207) selon la revendication 2, **caractérisée en ce qu'**elle comporte en outre un deuxième moyen de réception (209) d'une deuxième série d'images d'entrée (308,310) et **en ce que** l'unité de conversion (207) est conçue pour calculer la série d'images de sortie (316-326) sur base des images de la première série d'images d'entrée (308,310) et de la deuxième série d'images d'entrée (302,306).

5. Unité de conversion (207) selon la revendication 3, **caractérisée en ce qu'**elle est conçue:
- pour calculer une première image intermédiaire interpolée compensée en mouvement en interpolant entre la première image d'entrée (110) et le deuxième image d'entrée (112) de la première série d'images d'entrée;
- pour calculer une deuxième image intermédiaire interpolée compensée en mouvement en interpolant entre les images de la deuxième série d'images d'entrée; et
- pour fusionner la première image intermédiaire avec la deuxième image intermédiaire dans le but de créer une image de sortie combinée.

6. Procédé de conversion comportant:
- une étape de réception d'une première série d'images d'entrée qui comporte la réception successive d'une première image d'entrée (110), d'une deuxième image d'entrée (112) et d'au moins une troisième image d'entrée (114); et
- une étape de calcul qui comporte le calcul d'une série d'images de sortie sur base de la première série d'images d'entrée, où une image de sortie (118) est espacée d'un intervalle de temps prédéterminé (132) d'un prédécesseur (116), si présent, et qui comporte en outre le calcul d'une image de sortie (120, 122, 124, 126) espacée d'un intervalle de temps prédéterminé (132) d'un prédécesseur (118, 120, 122, 124), respectivement **caractérisé en ce que** le procédé comporte une étape de cadencement comportant la détermination d'un premier intervalle de temps (128) entre un premier instant de génération (T1) de la première image d'entrée (110) et un deuxième instant de génération (T2) de la deuxième image d'entrée (112), et la détermination d'un deuxième intervalle de temps (130) entre l'instant de génération (T2) d'une deuxième image d'entrée (112) et un troisième instant de génération (T3) d'une troisième image d'entrée (114) et
- **en ce que** l'étape de calcul comporte le calcul pour la série d'images de sortie (116 et 118) d'une image de sortie particulière (116,118) en interpolant entre la première image d'entrée (110) et la deuxième image d'entrée (112) sur base du premier intervalle de temps (128) et
- le calcul pour la série d'images de sortie (120, 122, 124, 126) d'une image de sortie particulière (120, 122, 124, 126) en interpolant entre la deuxième image d'entrée (112) et la troisième image d'entrée (114) sur base du deuxième intervalle de temps (130).

7. Appareil de traitement d'image (100) comportant une unité de conversion selon la revendication 1, l'appareil de traitement (100) comportant en outre:
- une chaîne de transformations graphiques (101) basée sur un processeur (108) permettant de générer une première série d'images d'entrée (110-114) comportant successivement une première image d'entrée (110) et une deuxième image d'entrée (112); et
- un dispositif d'affichage (106) permettant l'affichage de la série d'images de sortie (116-126).

8. Appareil de traitement d'image (103) selon la revendication 7, **caractérisé en ce que** l'unité de conversion (107) comporte en outre un estimateur de mouvement (109) permettant de commander le moyen de calcul (104) de la série d'images de sortie (116-126), afin de réaliser l'interpolation à compensation de mouvement.

9. Appareil de traitement d'image (111) selon la revendication 8, **caractérisé en ce que** l'unité de conversion (113) comporte en outre un deuxième moyen de réception (115) d'une deuxième série d'images d'entrée (302-306) et **en ce que** l'unité de conversion (113) est conçue pour calculer la série d'images de sortie (316-324) sur base des images de la première série d'images d'entrée (308,310) et de la deuxième série d'images d'entrée (302-306).

10. Appareil de traitement d'image (111) selon la revendication 9, **caractérisé en ce que** l'unité de conversion (113) est conçue:
- pour calculer une première image intermédiaire interpolée compensée en mouvement en interpolant entre la première image d'entrée (110) et la deuxième image d'entrée (112) de la première série d'images d'entrée;
- pour calculer une deuxième image intermédiaire interpolée compensée en mouvement en interpolant entre les images de la deuxième série d'images d'entrée; et
- pour fusionner la première image intermédiaire avec la deuxième image intermédiaire dans le but de créer une image de sortie combinée.
